Europäisches Patentamt

European Patent Office

Office européen des brevets

(11) Publication number: **0 186 699**
**B1**

(12) **EUROPEAN PATENT SPECIFICATION**

(45) Date of publication of patent specification: **14.03.90**

(51) Int. Cl.⁵: **G 02 B 6/38**

(21) Application number: **85903419.1**

(22) Date of filing: **11.06.85**

(86) International application number:
**PCT/SE85/00246**

(87) International publication number:
**WO 86/00421 16.01.86 Gazette 86/02**

(54) **SPLICE PROTECTOR FOR OPTICAL FIBRES.**

(30) Priority: **18.06.84 SE 8403251**

(43) Date of publication of application:
**09.07.86 Bulletin 86/28**

(45) Publication of the grant of the patent:
**14.03.90 Bulletin 90/11**

(84) Designated Contracting States:
**DE FR GB IT**

(56) References cited:
**CA-A-1 103 495**
**DE-A-3 226 020**
**US-A-4 046 454**
**US-A-4 123 138**
**US-A-4 257 674**
**US-A-4 385 801**
**US-A-4 385 801**
**Patent Abstract of Japan, Vol.5, NO 084,P64,abstract of JP 56-30109**
**Patent Abstract of Japan, Vol. 5, N0 32,P50, abstract of JP 55-156908**

(73) Proprietor: **TELEFONAKTIEBOLAGET L M ERICSSON**
**S-126 25 Stockholm (SE)**

(72) Inventor: **BÖTTCHER, Owe, Jens**
**Björktickegangen 53**
**S-135 33 Tyresö (SE)**

(74) Representative: **Johnsson, Helge**
**Telefonaktiebolaget L M Ericsson**
**S-126 25 Stockholm (SE)**

(56) References cited:
**Patent Abstract of Japan, Vol. 6, N0 129,P128,abstract of JP 57-53716**
**Patent Abstract of Japan, Vol. 7, N0 101,P194, abstract of JP 58-25611**
**"ANT"-NTN 78/0446**

Courier Press, Leamington Spa, England.

## Description

### Technical field

The invention relates to a splice protector for optical fibres and includes two halves.

Optical fibres may be spliced, e.g. by welding the ends together. The actual splice is then a weak link which should be protected against stresses.

### Background art

An already known splice protector, described in GB, A, 2060196, consists of two elongate covering members. These are each provided on one surface with grooves extending in the longitudinal direction of the members. This protector is only suitable for fibre conductors provided with a protective coating, the latter being stripped in the vicinity of the splice when two conductors are connected. Another disadvantage is that the parts are kept together stiffly, which results in the possibility that the fibre may be subjected to mechanical stresses at changes in temperature.

### Disclosure of invention

The object of the present invention is to provide a splice protector suitable for use with optical fibre conductors both with and without a protective coating and for conductors having different diameters. Furthermore, elastic movement as a result of temperature changes will be accomodated. The problem is solved by the splice protector comprising two halves which are kept together elastically.

The invention is defined in the accompanying claim.

### Brief description of drawings

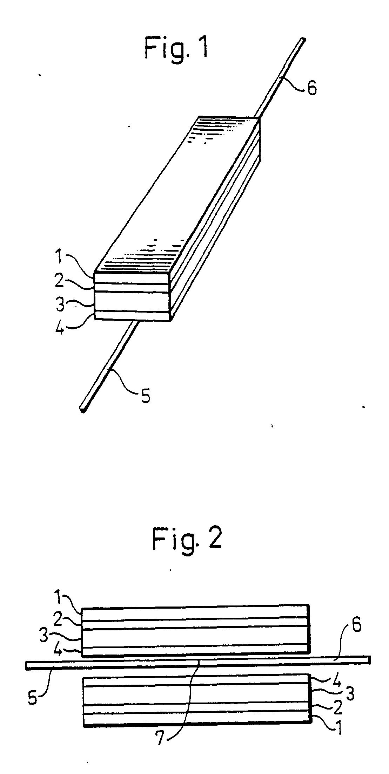

The invention will now be described in detail with reference to the drawing, where Figure 1 shows one half of a splice protector in perspective and Figure 2 illustrates a complete splice protector in side view.

### Best mode for carrying out the invention

In Figure 1, which illustrates one half of a splice protector, there is an elongate stiff plate 1, e.g. of metal, which is joined by an adhesive coating 2 to a coating 3 of an elastic material, e.g. foamed plastics. A further adhesive coating 4 is applied to the elastic coating for adhering to a corresponding elastic coating on the other half, which is identical with the first half. The numerals 5 and 6 denote fibre conductors which are welded together at their end surfaces.

In Figure 2 identical parts have the same reference denotations as in Figure 1. For the sake of clarity the halves are illustrated spaced from the conductors 5, 6 and their splice 7.

On assembly, the halves are pressed against each other so that they grip around the fibre conductors and adhere to each other along their adhesive coatings 4. The fibre conductors are thus kept firmly between the two protective halves.

The advantage achieved with the inventive splice protector is that it does not need to be provided with grooves. It can thus be used for fibre conductors with or without a protective coating and with different diameters. Furthermore, there is achieved the advantage with the embodiment in accordance with the Figures that the fibre conductors are not subjected to pressure caused by the components of the splice protector expanding inwards at temperature increases. This is because the parts are kept together elastically.

### Claim

A splice protector for protecting finished splices (7) between optical fibres (5, 6), including two halves, characterized in that each half includes a substantially flat rigid plate (1) and an elastic coating (3) which are fastened to each other by a coating (2) of an adhesive material, the elastic coatings engaging against each other and surrounding the fibres on both sides of the splice (7) and being kept together by a coating (4) of an adhesive material.

### Patentanspruch

Spleißschutz zum Schützen von gefertigten Spleißen (7) zwischen optischen Fasern (5, 6), der zwei Hälften einschließt, dadurch gekennzeichnet, daß jede Hälfte eine im wesentlichen flache, starte Platte (1) und eine elastische Beschichtung (3) umfaßt, die aneinander mittels einer Beschichtung (2) eines Klebstoffs befestigt sind, wobei die elastischen Beschichtungen gegeneinander eingreifen und die Fasern an beiden Seiten des Spleißes (7) umgeben und durch eine Beschichtung (4) eines Klebstoffs zusammengehalten werden.

### Revendication

Protecteur d'épissure destiné à protéger des épissures finies (7) entre des fibres optiques (5, 6), comprenant deux moitiés, caractérisé en ce que chaque moitié comprend une plaque rigide sensiblement plate (1) et un revêtement élastique (3) qui sont fixés l'un à l'autre par un revêtement (2) de matière adhésive, les revêtements élastiques portant l'un contre l'autre et entourant les fibres sur les deux côtés de l'épissure (7), et étant maintenus assemblés par un revêtement (4) de matière adhésive.

# Fig. 1

# Fig. 2